(19) Europäisches Patentamt
European Patent Office
Office européen des brevets

(11) **EP 4 608 022 A1**

(12) **EUROPEAN PATENT APPLICATION**

(43) Date of publication:
27.08.2025 Bulletin 2025/35

(21) Application number: 25158184.9

(22) Date of filing: 17.02.2025

(51) International Patent Classification (IPC):
*H04W 52/24* (2009.01)

(52) Cooperative Patent Classification (CPC):
H04W 52/241

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.02.2024 FI 20245213

(71) Applicant: Nokia Solutions and Networks Oy
02610 Espoo (FI)

(72) Inventors:
• PARELLO, Rosalia
  Versailles (FR)
• VERDIER, Denis
  Versailles (FR)

(74) Representative: Nokia EPO representatives
Nokia Technologies Oy
Karakaari 7
02610 Espoo (FI)

(54) **APPARATUS AND METHOD FOR POWER CONTROL A NETWORK DEVICE**

(57) An apparatus for a network device, the apparatus comprising at least one processor, and at least one memory storing instructions that, when executed by the at least one processor, cause the network device to: determine a first gain associated with a received signal, wherein the first gain characterizes a difference between a first signal to noise ratio obtainable by processing the received signal using a first technique based on interference rejection combining and a second signal to noise ratio obtainable by processing the received signal using a second technique different from the first technique, select, based on the first gain, a power control strategy out of a plurality of power control strategies for a terminal device associated with the received signal, at least temporarily apply the selected power control strategy for the terminal device.

## Fig. 1A

**Description**

**Field of the Disclosure**

Various example embodiments relate to an apparatus for a network device.
Further example embodiments relate to a method for a network device.

**Background**

Wireless communications systems design and deployment aim to provide multiple telecommunications services and may include a number of base stations providing cell coverage to support communications for a number of terminal devices, e.g., user equipment. A user equipment, e.g., mobile terminal, may communicate with a base station or network device via a downlink and an uplink. The downlink refers to the communications link from the base station to the terminal device, and the uplink refers to the communications link from the terminal device to the base station.
In some conventional approaches, a network device may control a transmit power to be used by a terminal device.

**Summary**

Various example embodiments of the disclosure are set out by the independent claims. The example embodiments and features, if any, described in this specification, that do not fall under the scope of the independent claims, are to be interpreted as examples useful for understanding various example embodiments of the disclosure.
Some examples relate to an apparatus for a network device, the apparatus comprising at least one processor, and at least one memory storing instructions that, when executed by the at least one processor, cause the network device to: determine a first gain associated with a received signal, wherein the first gain characterizes a difference between a first signal to noise ratio obtainable by processing the received signal using a first technique based on interference rejection combining and a second signal to noise ratio obtainable by processing the received signal using a second technique different from the first technique, select, based on the first gain, a power control strategy out of a plurality of power control strategies for a terminal device associated with the received signal, at least temporarily apply the selected power control strategy for the terminal device. In some examples, selecting the power control strategy for the terminal device based on the first gain may enable to avoid useless power emission at the terminal device and/or to reduce intra-cell and/or inter-cell interference.
In some examples, the network device may adhere to and/or may be based on some accepted (and/or planned) specification, e.g., standard, such as, e.g., 3G, 4G, 5G, 6G, or some other wireless communication standard.
In some examples, e.g., similarly, the terminal device may adhere to and/or may be based on some accepted (and/or planned) specification, e.g., standard, such as, e.g., 3G, 4G, 5G, 6G, or some other wireless communication standard.
In some examples, the network device may, e.g., be a base station, e.g., gNB.
In some examples, the terminal device may, e.g., be a user equipment, UE.
In some examples, at least temporarily applying the power control strategy for the terminal device comprises at least one of: a) transmitting at least one command associated with a transmit power to be used by the terminal device, or b) excluding to transmit, e.g., not transmitting, at least one command associated with a transmit power to be used by the terminal device.
In some examples, the first technique comprises using a minimum mean square error equalizer configured to perform interference rejection combining.
In some examples, the second technique comprises at least one of: a) determining a pre-equalized signal to noise ratio, or b) using a minimum mean square error equalizer configured to perform maximum ratio combining.
In some examples, the instructions, when executed by the at least one processor, cause the network device to: determine, whether the first gain is greater than a first predetermined threshold, and, if the first gain is greater than the first predetermined threshold, evaluate the first signal to noise ratio.
In some examples, the instructions, when executed by the at least one processor, cause the network device to: determine, whether the first signal to noise ratio is greater than a second predetermined threshold, and, if the first signal to noise ratio is greater than the second predetermined threshold, exclude to transmit a power up command to the terminal device.
In some examples, the instructions, when executed by the at least one processor, cause the network device to: if the first signal to noise ratio does not exceed the second predetermined threshold, evaluate an interference to noise ratio associated with the received signal.
In some examples, the instructions, when executed by the at least one processor, cause the network device to:

determine, whether a or the interference to noise ratio associated with the received signal is greater than a third predetermined threshold, and, if the interference to noise ratio is greater than the third predetermined threshold, exclude to transmit a power up command to the terminal device.

In some examples, the instructions, when executed by the at least one processor, cause the network device to: if the interference to noise ratio does not exceed the third predetermined threshold, exclude to transmit a power down command to the terminal device.

In some examples, the instructions, when executed by the at least one processor, cause the network device to: determine, whether the first gain does not exceed a or the first predetermined threshold, and, if the first gain does not exceed the first predetermined threshold, perform power control of the terminal device based on the second signal to noise ratio.

In some examples, a first power control strategy of the plurality of power control strategies comprises evaluating at least one of the following elements: a) the first signal to noise ratio, or b) a or the interference to noise ratio associated with the received signal.

In some examples, a second power control strategy of the plurality of power control strategies comprises evaluating the second signal to noise ratio.

Some examples relate to an apparatus for a network device, the apparatus comprising means for: determining a first gain associated with a received signal, wherein the first gain characterizes a difference between a first signal to noise ratio obtainable by processing the received signal using a first technique based on interference rejection combining and a second signal to noise ratio obtainable by processing the received signal using a second technique different from the first technique, selecting, based on the first gain, a power control strategy out of a plurality of power control strategies for a terminal device associated with the received signal, at least temporarily applying the selected power control strategy for the terminal device.

In some examples, the means for determining the first gain associated with a received signal, selecting, based on the first gain, the power control strategy, at least temporarily applying the selected power control strategy for the terminal device may, e.g., comprise at least one processor, and at least one memory storing instructions that, when executed by the at least one processor, cause the network device to perform at least one of the aforementioned aspects of determining the first gain, selecting the power control strategy, at least temporarily applying the selected power control strategy for the terminal device.

In some examples, the means for determining the first gain associated with a received signal, selecting, based on the first gain, the power control strategy, at least temporarily applying the selected power control strategy for the terminal device may, e.g., comprise circuitry configured to perform at least one of the aforementioned aspects of determining the first gain, selecting the power control strategy, at least temporarily applying the selected power control strategy.

Some examples relate to a network device comprising at least one apparatus according to the disclosure.

Some examples relate to a communication system comprising at least one apparatus according to the disclosure.

Some examples relate to a method for a network device, the method comprising: determining a first gain associated with a received signal, wherein the first gain characterizes a difference between a first signal to noise ratio obtainable by processing the received signal using a first technique based on interference rejection combining and a second signal to noise ratio obtainable by processing the received signal using a second technique different from the first technique, selecting, based on the first gain, a power control strategy out of a plurality of power control strategies for a terminal device associated with the received signal, at least temporarily applying the selected power control strategy for the terminal device.

In some examples, the method comprises: determining, whether the first gain is greater than a first predetermined threshold, and, if the first gain is greater than the first predetermined threshold, evaluating the first signal to noise ratio.

In some examples, the method comprises: determining, whether the first signal to noise ratio is greater than a second predetermined threshold, and, if the first signal to noise ratio is greater than the second predetermined threshold, excluding to transmit a power up command to the terminal device.

In some examples, the method comprises: determining, whether an interference to noise ratio associated with the received signal is greater than a third predetermined threshold, and, if the interference to noise ratio is greater than the third predetermined threshold, excluding to transmit a power up command to the terminal device.

Some examples relate to a computer program comprising instructions which, when executed by an apparatus, cause the apparatus to perform the method according to the disclosure.

Some examples relate to a computer readable storage medium, comprising the computer program according to the disclosure.

Some examples relate to a data carrier signal carrying and/or characterizing the computer program according to the disclosure.

**Brief Description of the Figures**

Fig. 1A    schematically depicts a simplified block diagram,

Fig. 1B    schematically depicts a simplified block diagram,

Fig. 2    schematically depicts a simplified block diagram,

Fig. 3    schematically depicts a simplified flow chart,

Fig. 4    schematically depicts a simplified block diagram,

Fig. 5    schematically depicts a simplified flow chart,

Fig. 6    schematically depicts a simplified flow chart,

Fig. 7    schematically depicts a simplified flow chart,

Fig. 8    schematically depicts a simplified flow chart,

Fig. 9    schematically depicts a simplified block diagram,

Fig. 10    schematically depicts a simplified block diagram.

**Description of some Example Embodiments**

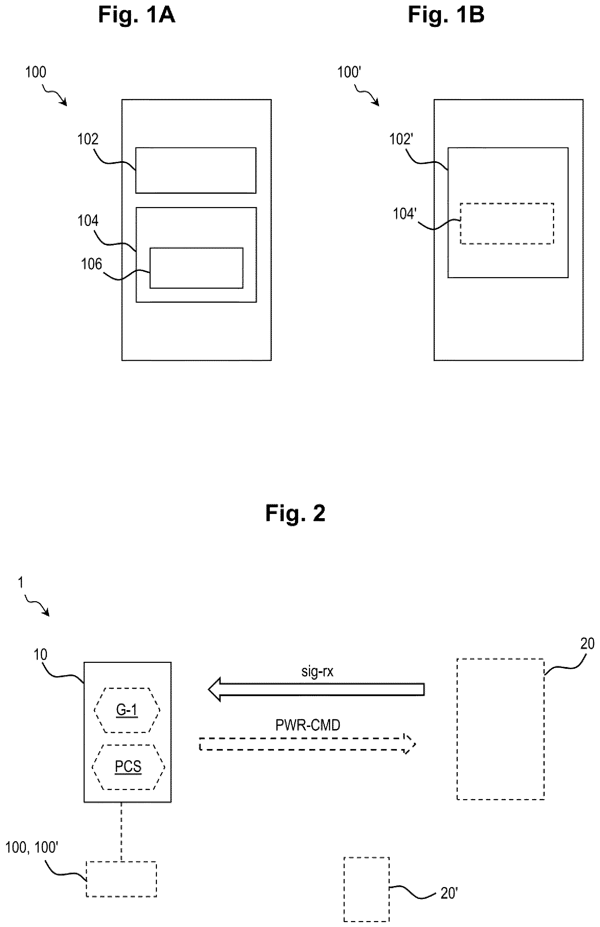

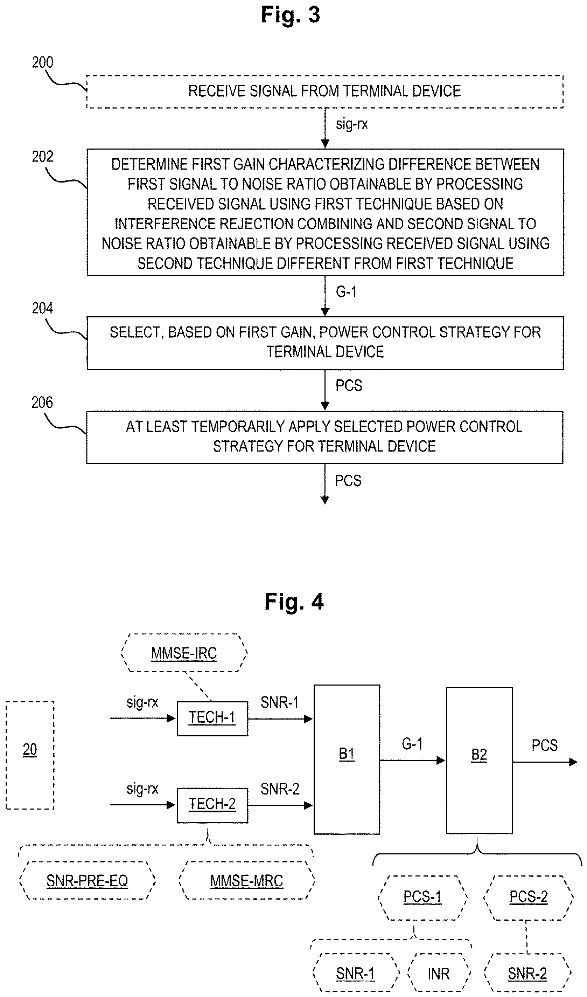

Some examples, see Fig. 1A, 2, 3 relate to an apparatus 100 for a network device 10, the apparatus 100 comprising at least one processor 102, and at least one memory 104 storing instructions 106 that, when executed by the at least one processor 102, cause the network device 10 to: determine 202 (see also block B-1 of Fig. 4) a first gain G-1 associated with a received signal sig-rx, wherein the first gain G-1 characterizes a difference between a first signal to noise ratio SNR-1, see Fig. 4, obtainable by processing the received signal sig-rx using a first technique TECH-1 based on interference rejection combining and a second signal to noise ratio SNR-2 obtainable by processing the received signal sig-rx using a second technique TECH-2 different from the first technique TECH-1, select 204 (Fig. 3, see also block B-2 of Fig. 4), based on the first gain G-1, a power control strategy PCS out of a plurality of, e.g., different, power control strategies PCS-1, PCS-2 (Fig. 4) for a terminal device 20 associated with the received signal sig-rx, at least temporarily apply 206 (Fig. 3) the selected power control strategy PCS for the terminal device 20.

In some examples, the received signal sig-rx is a signal that has been transmitted by the terminal device 20 (Fig. 3) and that has been received by the network device 100, see the optional block 200 of Fig. 3.

In some examples, Fig. 3, selecting 204 the power control strategy PCS for the terminal device 20 based on the first gain G-1 (see also block B2 of Fig. 4) may enable to avoid useless power emission at the terminal device 20 and/or to reduce intra-cell and/or inter-cell interference, e.g., with respect to at least one radio cell (not shown) associated with, e.g., provided by, the network device 10.

In some examples, Fig. 3, at least temporarily applying 206 the power control strategy PCS for the terminal device 20 may comprise at least one of: a) transmitting at least one command PWR-CMD associated with a transmit power to be used by the terminal device 20, or b) excluding to transmit, e.g., not transmitting, at least one command PWR-CMD associated with a transmit power to be used by the terminal device 20.

In some examples, the at least one command PWR-CMD may comprise at least one of: a) an indication for the terminal device to increase a transmit power (e.g., a "PWR UP Command"), or b) an indication for the terminal device to decrease a transmit power (e.g., a "PWR DOWN Command").

In some examples, Fig. 2, the network device 100 may adhere to and/or may be based on some accepted (and/or planned) specification, e.g., standard, such as, e.g., 3G, 4G, 5G, 6G, or some other wireless communication standard.

In some examples, Fig. 2, e.g., similarly, the terminal device 20 may adhere to and/or may be based on some accepted (and/or planned) specification, e.g., standard, such as, e.g., 3G, 4G, 5G, 6G, or some other wireless communication standard.

In some examples, Fig. 2, the network device 10 may, e.g., be a base station, e.g., gNB.

In some examples, Fig. 2, the terminal device 20 may, e.g., be a user equipment, UE.

In some examples, Fig. 4, the first technique TECH-1 comprises using a minimum mean square error equalizer MMSE-IRC configured to perform interference rejection combining, IRC. Thus, in some examples, the first signal to noise ratio SNR-1 obtainable by using the first technique TECH-1 may be denoted as "post-equalized IRC SNR".

In some examples, Fig. 4, the second technique TECH-2 comprises at least one of: a) determining a pre-equalized signal to noise ratio SNR-PRE-EQ, or b) using a minimum mean square error equalizer MMSE-MRC configured to perform maximum ratio combining.

In some examples, a, for example conventional, Maximum Ratio Combining (MRC) or minimum mean square error (MMSE) receiver technique may maximize a signal-to-noise ratio, SNR, by combining a respective input from each antenna of an antenna system of a receiver with weights proportional to a radio channel's detected amplitude. In some examples, the MRC/MMSE receiver technique may aims at a maximization of a wanted signal, e.g., as transmitted by the terminal device 20 and as received by the network device 10, e.g., ignoring potential interferers 20' (Fig. 2). In some examples, the MRC/MMSE receiver technique may be an optimum combiner for independent additive white Gaussian noise channels.

In some examples, using a technique based on interference rejection combining, a signal to interference and noise ratio, SINR, may be maximized, e.g., in order to balance an amplification of a power of the desired signal, as well as suppression of an interference caused by other signals, e.g., interfering terminal devices 20' (Fig. 2), e.g., from neighbor cells. In some examples, interference rejection combining may be optimal in a presence of intra-cell interference and inter-cell interference.

In some examples, interference rejection combining based on the minimum mean squared error (MMSE) criterion may be jointly optimal in the presence of noise and interference.

In some examples, Fig. 4, applying the first technique TECH-1 based on interference rejection combining may enable to exploit an unwanted correlation to detect an interferer 20' (Fig. 2) and suppress it or its signal energy, respectively.

In some examples, e.g., at a same radio condition, a low signal to noise ratio, SNR, may be converted to a higher SINR after interference rejection so that, e.g., if the first gain G-1, e.g., "IRC gain" is determined, e.g., correctly anticipated, by the network device 10, a higher data rate can be obtained, e.g., in noise rise conditions.

In some examples, OFDMA transmissions as e.g. used by 4G- or 5G-based communication systems are well suited for an IRC design, since they permit narrowband processing.

In some examples, e.g., compared to multi-antenna receivers that do not (e.g., at least temporarily) take interference (i.e., spatially correlated noise) into account (such as, e.g., maximal ratio combining (MRC)), an IRC-based technique TECH-1 according to some examples may, in some examples, yield a, for example significant, performance gain.

In some examples, the IRC gain G-1, e.g. evaluation the first gain G-1, may, e.g., be used for handling different, e.g., many, types of inter-cell interference, thus, e.g., bringing significant improvement, e.g., when an Interference over Thermal noise (IoT) is high.

Thus, in some examples, it is proposed to use, e.g. exploit, the IRC gain, e.g., the first gain G-1, as, e.g., determined according to block 202 of Fig. 3, e.g., to enhance a performance, e.g., with a power control for the terminal device 20, e.g., a power control loop, e.g., based not only on Signal to Noise Ratio (SNR), as, e.g., in some conventional approaches, but also on an Interference over Noise Ratio, INR, factor.

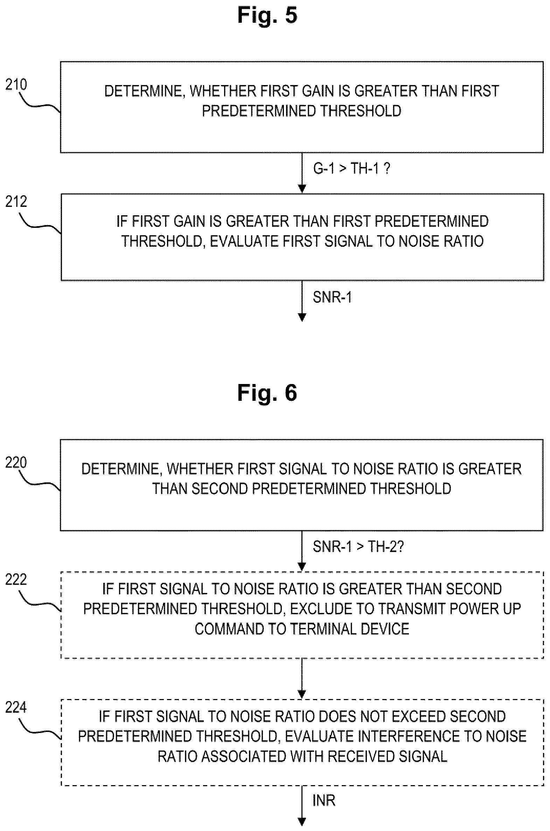

In some examples, Fig. 5, the instructions 106, when executed by the at least one processor 102, cause the network device 10 to: determine 210, whether the first gain G-1, e.g., IRC gain, is greater than a first predetermined threshold TH-1, and, if the first gain G-1 is greater than the first predetermined threshold TH-1, evaluate 212 the first signal to noise ratio SNR-1, e.g., for a power control of the terminal device.

In some examples, the first predetermined threshold TH-1 may be selected to be zero. Thus, in some examples, Fig. 5, determining 210, whether the first gain G-1 is greater than the first predetermined threshold TH-1 corresponds to determining whether the first gain G-1 has a non-vanishing value, e.g., is greater than zero. In some examples, this means that there is a non-vanishing IRC gain G-1, and, based on this determination, in some examples, the power control strategy PCS for the terminal device 20 may be selected, e.g., from different possible power control strategies PCS-1, PCS-2.

In some examples, Fig. 6, the instructions 106, when executed by the at least one processor 102, cause the network device 10 to: determine 220, whether the first signal to noise ratio SNR-1 (e.g., the post-equalized IRC SNR) is greater than a second predetermined threshold TH-2, and, if the first signal to noise ratio SNR-1 is greater than the second predetermined threshold TH-2, exclude 222 to transmit a power up command to the terminal device 20.

In some examples, the second predetermined threshold TH-2 may, e.g., characterize or represent a signal to noise ratio target, e.g., a desired SNR value to obtain. In some examples, the procedure based on blocks 220, 222 may ensure to avoid instructing the terminal device 20 to increase its transmit power in cases where, e.g., the SNR target is already reached, e.g., because the post-equalized IRC SNR SNR-1 exceeds the second predetermined threshold TH-2. This way, in some examples, an energy efficient operation of the terminal device 20 regarding its transmit power can be attained, as well as avoiding, e.g., additional, interference (inter-cell and/or intra-cell), which may result from the terminal device 20 transmitting with an unnecessarily high transmit power, as seen from an IRC SNR point of view, e.g., in view of the SNR target TH-2, e.g., according to block 222 of Fig. 6.

In some examples, Fig. 6, the instructions 106, when executed by the at least one processor 102, cause the network device 10 to: if the first signal to noise ratio SNR-1 does not exceed the second predetermined threshold TH-2 (e.g., SNR target TH-2 is not reached), evaluate 224 an interference to noise ratio INR associated with the received signal sig-rx. Thus, in some examples, a power control strategy for the terminal device 20 may, e.g., be refined, e.g., by evaluating the interference to noise ratio INR, e.g., if the SNR target TH-2 is not reached according to block 222.

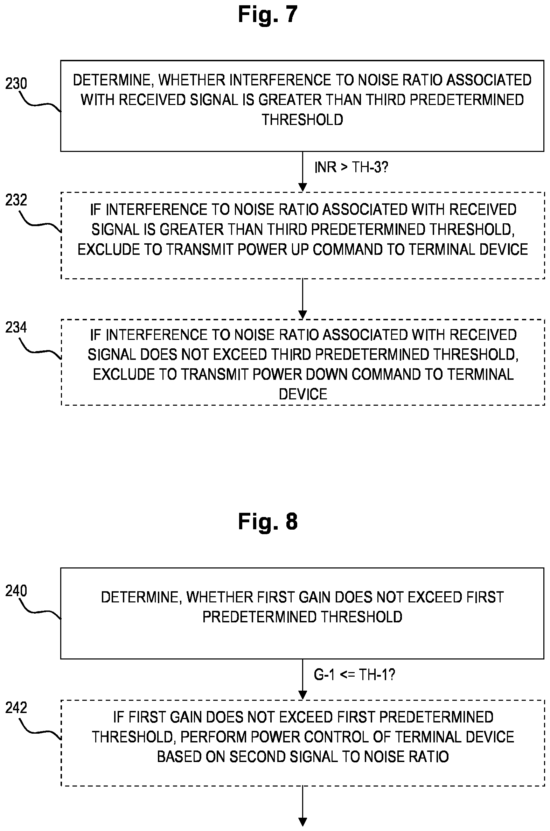

In some examples, Fig. 7, the instructions 106, when executed by the at least one processor 102, cause the network device 10 to: determine 230, whether the interference to noise ratio INR associated with the received signal sig-rx is greater than a third predetermined threshold TH-3, and, if the interference to noise ratio INR is greater than the third predetermined threshold TH-3, exclude 232 to transmit a power up command to the terminal device. In some examples, this may enable to avoid further interference as may be caused by instructing the terminal device 20 to (further) increase its transmit power.

In some examples, Fig. 7, the instructions 106, when executed by the at least one processor 102, cause the network device 10 to: if the interference to noise ratio INR does not exceed the third predetermined threshold TH-3, exclude 234 to transmit a power down command to the terminal device 20.

In some examples, Fig. 8, the instructions 106, when executed by the at least one processor 102, cause the network device 10 to: determine 240, whether the first gain G-1 does not exceed the first predetermined threshold TH-1, and, if the first gain G-1 does not exceed the first predetermined threshold TH-1, perform 242 power control of the terminal device 20 based on the second signal to noise ratio SNR-2, e.g., not based on the first signal to noise ratio SNR-1.

In some examples, Fig. 4, a first power control strategy PCS-1 of the plurality of power control strategies comprises evaluating at least one of the following elements: a) the first signal to noise ratio SNR-1, or b) the interference to noise ratio INR associated with the received signal sig-rx.

In some examples, Fig. 4, a second power control strategy PCS-2 of the plurality of power control strategies comprises evaluating the second signal to noise ratio SNR-1.

Some examples, Fig. 1B, relate to an apparatus 100' for a network device 10, the apparatus 100' comprising means 102' for: determining 202 (Fig. 3) a first gain G-1 associated with a received signal, wherein the first gain characterizes a difference between a first signal to noise ratio obtainable by processing the received signal using a first technique based on interference rejection combining and a second signal to noise ratio obtainable by processing the received signal using a second technique different from the first technique, selecting 204, based on the first gain, a power control strategy out of a plurality of power control strategies for a terminal device associated with the received signal, at least temporarily applying 206 the selected power control strategy for the terminal device.

In some examples, Fig. 1B, the means 102' for determining 202 the first gain associated with a received signal, selecting 204, based on the first gain, the power control strategy, at least temporarily applying 206 the selected power control strategy for the terminal device may, e.g., comprise at least one processor 102 (see, for example, Fig. 1A), and at least one memory 104 storing instructions 106 that, when executed by the at least one processor 102, cause the network device 10 to perform at least one of the aforementioned aspects of determining 202 the first gain, selecting 204 the power control strategy, at least temporarily applying 206 the selected power control strategy for the terminal device.

In some examples, Fig. 1B, the means 102' for determining the first gain associated with a received signal, selecting, based on the first gain, the power control strategy, at least temporarily applying the selected power control strategy for the terminal device may, e.g., comprise circuitry 104' configured to perform at least one of the aforementioned aspects of determining the first gain, selecting the power control strategy, at least temporarily applying the selected power control strategy.

Some examples, Fig. 2, relate to a network device 10, e.g., gNB, comprising at least one apparatus 100, 100' according to the disclosure.

In some examples, Fig. 2, the apparatus 100, 100' or a respective functionality may be integrated into the network device 10.

In some other examples, Fig. 2, the apparatus 100, 100' or a respective functionality may be provided for the network device 10, but, e.g., may not be integrated into the network device 10 or may, e.g., at least not fully be integrated into the network device 10.

Some examples, Fig. 2, relate to a communication system 1 comprising at least one apparatus 100, 100' according to the disclosure.

Some examples, Fig. 3, relate to a method for a network device 10, the method comprising: determining 202 a first gain associated with a received signal, wherein the first gain characterizes a difference between a first signal to noise ratio obtainable by processing the received signal using a first technique based on interference rejection combining and a second signal to noise ratio obtainable by processing the received signal using a second technique different from the first technique, selecting 204, based on the first gain, a power control strategy out of a plurality of power control strategies for a terminal device associated with the received signal, at least temporarily applying 206 the selected power control strategy for the terminal device.

In some examples, Fig. 5, the method comprises: determining 210, whether the first gain is greater than a first predetermined threshold, and, if the first gain is greater than the first predetermined threshold, evaluating 212 the first signal to noise ratio.

In some examples, Fig. 6, the method comprises: determining 220, whether the first signal to noise ratio is greater than a second predetermined threshold, and, if the first signal to noise ratio is greater than the second predetermined threshold, excluding 222 to transmit a power up command to the terminal device.

In some examples, Fig. 7, the method comprises: determining 230, whether an interference to noise ratio associated with the received signal is greater than a third predetermined threshold, and, if the interference to noise ratio is greater than the third predetermined threshold, excluding 232 to transmit a power up command to the terminal device.

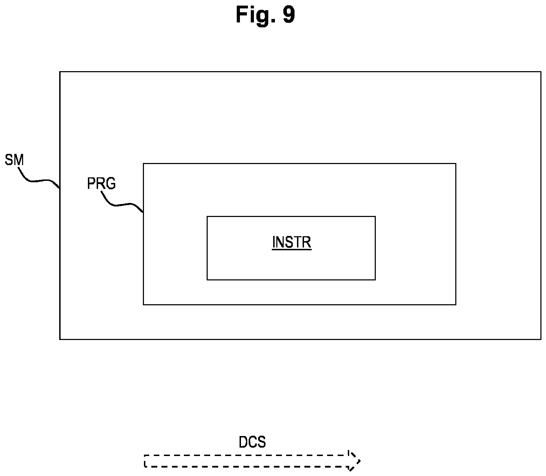

Some examples, Fig. 9, relate to a computer program PRG comprising instructions INSTR which, when executed by an apparatus 100, 100', cause the apparatus 100, 100' to perform the method according to the disclosure.

Some examples, Fig. 9, relate to a computer readable storage medium SM (see, for example, also the memory 104 of Fig. 1A), e.g., a non-transitory computer readable storage medium SM, comprising the computer program PRG according to the disclosure.

Some examples, Fig. 9, relate to a data carrier signal DCS carrying and/or characterizing the computer program PRG according to the disclosure.

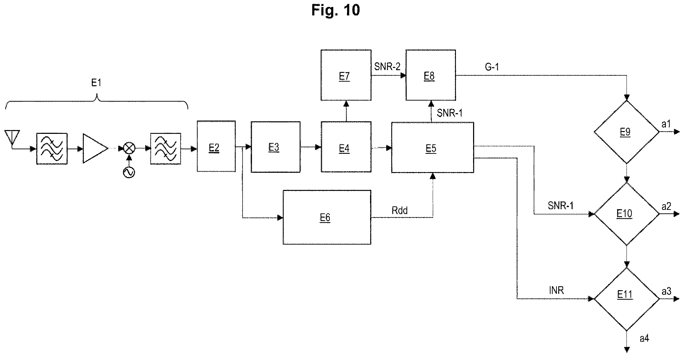

Fig. 10 schematically depicts a simplified block diagram illustrating aspects of some examples. The bracket E1 collectively denotes a receiver chain of a network device, e.g., network device 10 (Fig. 2) according to some examples. In some examples, the receiver chain E1 may comprise at least one of the following elements: a) an antenna system, or b) one or more filters, e.g., band pass filters, or c) at least one amplifier, e.g., low noise amplifier, LNA, or d) a downconversion stage, e.g., for transforming a received signal in the radio frequency, RF, range to another, e.g., lower, frequency range, such as, e.g., an intermediate frequency, IF, range or a baseband frequency range, e.g.. In some examples, the downconversion stage may, e.g., comprise a local oscillator.

Element E2 of Fig. 10 symbolizes an FFT stage performing a fast Fourier transform. Element E3 symbolizes a channel estimation stage for performing channel estimation, e.g., based on an output of the FFT stage E2. Element E4 symbolizes a noise and signal power estimation stage for determining a noise power and a signal power.

Element E5 symbolizes an equalizer stage configured to, e.g., selectively, perform at least one of a) the first technique TECH-1 (e.g., minimum mean square error equalization with interference rejection combining, e.g., "MMSE IRC"), or b) the second technique TECH-2 (e.g., MMSE MRC).

In other words, in some examples, the equalizer stage E5 is configured to determine the first signal to noise ratio SNR-1 obtainable by using the first technique TECH-1, e.g., the "post-equalized IRC SNR". In some examples, the equalizer stage E5 may provide the first signal to noise ratio SNR-1 to further blocks E8, E10 explained further below.

Further, in some examples, the equalizer stage E5 is configured to determine the interference to noise ratio INR. In some examples, the equalizer stage E5 may provide the interference to noise ratio INR to at least one further block E11 explained further below.

Element E6 symbolizes a determination unit configured to determine, e.g., based on the output of the FFT block E2, a noise plus interference disturbance covariance matrix Rdd, as explained further below. In some examples, the determination unit E6 may be configured to provide the matrix Rdd to the equalizer stage E5.

Element E7 symbolizes a determination of a pre-equalized SNR estimate, e.g., as characterized by the second signal to noise ratio SNR-2, which may be provided to element E8.

In some examples, element E8 symbolizes a determination of an IRC gain estimate, e.g., the IRC gain, e.g., as characterized by the first gain G-1 explained above, e.g., with reference to block 202 of Fig. 3, e.g., based on the input parameters SNR-1, SNR-2.

Element E9 symbolizes a determination whether the IRC gain G-1 exceeds the first predetermined threshold TH-1, e.g., at least similar to block 210 of Fig. 5. If so, e.g., if the IRC gain G-1 exceeds the first predetermined threshold TH-1, the procedure continues with element E10, symbolizing a determination whether the first SNR-1 exceeds the second predetermined threshold TH-2, e.g., at least similar to block 220 of Fig. 6. If not, e.g., if the determination E9 yields that the IRC gain G-1 does not exceed the first predetermined threshold TH-1, the second power control strategy PCS-2 (Fig. 4), for the terminal device 20 may be applied, see arrow a1 of Fig. 10. In some examples, the second power control strategy PCS-2 may comprise a conventional power control strategy, which, e.g., may be based on the second signal to noise ratio SNR-2, but, e.g., not based on the first signal to noise ratio SNR-1.

Returning to Fig. 10, block E10, e.g., symbolizing the determination whether the first SNR-1 exceeds the second predetermined threshold TH-2, e.g., at least similar to block 220 of Fig. 6, if the determination E10 yields that the first SNR-1 exceeds the second predetermined threshold TH-2, e.g. the SNR target, it is excluded to transmit "power up" commands to the terminal device 20, see arrow a2 of Fig. 10. In other words, if the determination E10 proceeds according to arrow a2, no "power up" commands are transmitted by the network device 10 to the terminal device 20.

Otherwise, e.g., if the determination E10 yields that the first SNR-1 does not exceed the second predetermined threshold TH-2, the procedure continues with element E11, symbolizing a determination whether the interference to noise ratio INR exceeds the third predetermined threshold TH-3, e.g., at least similar to block 230 of Fig. 7. If the determination E11 yields that the interference to noise ratio INR does not exceed the third predetermined threshold TH-3, see arrow a3 of Fig. 10, it is excluded to transmit "power down" commands to the terminal device 20. In other words, if the determination E11 proceeds according to arrow a3, no "power down" commands are transmitted by the network device 10 to the terminal device 20. Otherwise, e.g., if the determination E11 yields that the interference to noise ratio INR exceeds the third predetermined threshold TH-3, see arrow a4 of Fig. 10, it is excluded to transmit "power up" commands to the terminal device 20. In other words, if the determination E11 proceeds according to arrow a4, no "power up" commands are transmitted by the network device 10 to the terminal device 20.

To summarize, in some examples, the different outcomes of the determinations E9, E10, E11 represent aspects of different power control strategies that may, e.g., selectively, be applied by the network device 10 to the terminal device, e.g., based at least on some of the following parameters: a) first gain G-1, or b) first signal to noise ratio SNR-1, or c) second signal to noise ratio SNR-2.

In the following, further aspects and examples are disclosed, which, in some examples, may be combined with at least one of the aspects and/or examples disclosed above.

In some examples, Fig. 2, the principle according to the disclosure may be used for wireless communication systems 1, e.g. for apparatuses 100, 100' in wireless access networks, e.g., at least temporarily using aspects of interference rejection combining, IRC.

In some examples, Fig. 2, the principle according to the disclosure enables to provide a method for power control, e.g., for controlling a transmit power of terminal devices 20. In some examples, at least temporarily using interference rejection combining, e.g., for determining the first signal to noise ratio SNR-1, may enable to maximize a wireless access node network performance, e.g., by considering a Noise Rise characterization and by at least temporarily controlling aspects of the Interference over Thermal noise (IoT).

In some examples, an optimal trade-off for a maximum performance target for, e.g., each, served user and maximum cell noise rise target for IoT control, may be based on a power control method taking as input the post-equalized signal to noise ratio from a minimum mean squared error (MMSE) IRC technique receiver, e.g., jointly with an interference to noise ratio, INR, estimate, e.g., as a function of an IRC Gain characterization, see, for example the determination block E9 of Fig. 10.

In some examples, a method with twofold scope may be provided: it may a) enable to reduce battery consumption of the terminal device 20, thus also b) avoiding useless user power emission, e.g., based on an access node receiver SNR metric input to data decoding, e.g., at a given error target, see, for example, the determination block E10 of Fig. 10.

In some example, the principle according to the disclosure enables to control an access network noise rise, e.g., based on INR metric input to IoT control. In some examples, a stability of a network noise rise may be prioritized.

In some examples, the principle according to the disclosure enables to mitigate high intra-cell and/or inter-cell interference, e.g., based on UE power emission control, e.g., in the form of the selection 204 (Fig. 2) of the power control strategy PCS based on the first gain G-1.

In some examples, Fig. 2, the received signal sig-rx may be modelled as in equation (1):

$$y = Hs + i + n = Hs + d, \tag{1}$$

wherein $y$ characterizes a signal input to a receiver, e.g., of the network device 10, $H$ characterizes a channel response, $s$ characterizes a signal transmitted (e.g., by the terminal device 10), wherein $d = i + n$, wherein $i$ characterizes interference and $n$ characterizes thermal noise.

In some examples, a disturbance covariance matrix of interference and noise may be defined as in the expression:

$$R_{dd} = E\{\mathbf{d} \cdot \mathbf{d}^{\,H}\} \tag{2}.$$

In some examples, e.g., for a conventional MMSE-MRC equalizer, it may be assumed that the term $d$ in equation (1) includes, for example only, white Gaussian noise (e.g., thermal noise), and that there is no antenna correlated interference. Thus, in some examples, $\mathbf{R}_{dd}$ is a diagonal matrix with estimated noise power as diagonal elements as in the expression:

$$R_{dd,ij} = \begin{cases} \hat{\sigma}^2, & i = j \\ 0, & i \neq j \end{cases}. \tag{3}$$

In some examples, e.g., for an MMSE-IRC equalizer, from equation (1), an estimate $\hat{d}$ of unwanted interference and noise can be defined as in the expression:

$$\hat{d} = \begin{cases} y - \widehat{H}s, & for\ pilot\ tones\ with\ wanted\ signal \\ y, & for\ pilot\ tones\ with\ unwanted\ signal \end{cases}. \qquad (4)$$

In some examples, $s$ may characterize transmitted reference signal(s) comprising pilot tones that are known at the receiver, e.g., of the network device.

In some examples, let us denote with $W_{MMSE}$ a general expression of a minimum mean square error (MMSE) equalizer weight given by the equation:

$$W_{MMSE} = \left(\widehat{H}^H R_{dd}^{-1} \widehat{H} + I\right)^{-1} \widehat{H}^H R_{dd}^{-1}, \qquad (7)$$

which satisfies the function:

$$W_{MMSE} = \arg\min_W \{E|s - Wy|^2\}, \qquad (8)$$

with resulting:

$$\tilde{s} = W_{MMSE} y. \qquad (9)$$

In some examples, in maximum ratio combining, MRC, interference may be considered as noise, which means, that, in some examples, only diagonal entries of a covariance matrix are considered during an equalizer weight calculation. In some examples, this may be optimal, e.g., in case there is no interference at all (e.g., where off-diagonal entries are all zero in the covariance matrix).

In some examples, e.g., compared to MRC, the IRC technique may improve a receiver performance, because it may take the full covariance matrix into account during equalizer weight calculation.

In some examples, e.g., in presence of unwanted interference over thermal noise, an MMSE-IRC equalizer (see, for example, block E5 of Fig. 10) may improve a post-Equalized SNR, e.g., the first signal to noise ratio SNR-1. In some examples, a signal-to-interference-plus noise ratio before and after interference rejection may yield a higher value over thermal noise.

In some examples, in the absence of interference in equation (1), an MMSE-IRC equalizer may provide at least a same post-equalized SNR as may be obtained from an MMSE-MRC equalizer.

In some examples, in an MMSE-IRC equalizer, which may, e.g., be used for combining signals from several receive antennas, a post equalized signal to noise ratio (SINR) may be determined, e.g., to maximize a SINR of a wanted user or terminal device 20, respectively, e.g., by applying complex weights to the receive antennas or antenna elements, respectively. Note that while an IRC-based equalizing technique cannot cancel white noise, in some examples, it can cancel, e.g., spatially correlated interferers, e.g., up to N-1 interferers, wherein N is a number of antenna elements.

In some examples, e.g., in presence of unwanted interference, e.g., caused by at least one further terminal device 20' (Fig. 2), an MMSE-IRC equalizer may improve a post-equalized SNR, e.g., by the IRC gain or IRC gain factor, respectively, and, in some examples, the IRC gain, as, e.g., characterized by the first gain G-1, may be used as an input to a power control methodology according to the disclosure. In other words, in some examples, a power control strategy PCS for the terminal device 10 may be selected based on the first gain G-1.

In some examples, e.g., as already mentioned above, the IRC gain may be defined as a difference, e.g., delta, e.g., between a pre-Equalized SNR (e.g., SNR-2) and a post-equalized MMSE IRC SNR (e.g., SNR-1). In some other examples, the IRC gain may be defined as a difference or delta between a post-equalized MMSE MRC SNR and the post-equalized MMSE IRC SNR (e.g., SNR-1).

In some examples, if there is no IRC gain, e.g., G-1 = 0, that is, for example, in UL interference-free scenarios, pre-equalized SNR or post-equalized MMSE MRC SNR metric input may be used, e.g., as for a conventional power control for the terminal device 20, e.g., compared to related thresholds target set, as known by the skilled person. This means that, in some examples, the network device 20 may, e.g., signal power commands in the form of either a) no Power UP command to UE (e.g., Power Down or no Power change command to the UL power of the terminal device 20) or b) no Power Down command to UE (i.e. Power UP or no Power change command to the UL power of the terminal device 20).

In some examples (Fig. 3), selecting 204 the power control strategy PCS based on the first gain G-1 may be performed when the IRC gain G-1 determined to be positive, see block 202 of Fig. 3, that is, e.g., in no interference-free scenarios for a UL cell coverage.

In some examples, as already mentioned above, e.g., once the IRC gain G-1 is determined, e.g., estimated, and determined to be positive, it is proposed to use the post-Equalized MMSE IRC SNR metric, e.g., the second signal to noise ratio SNR-2, e.g., jointly with the interference to noise ratio, INR, e.g., with twofold scope: a) to reduce a battery consumption of the terminal device 20, e.g., for useless power emission when an access node receiver SNR metric input allows decoding data at certain error target (e.g., post-equalized MMSE SNR Block Error Rate of, e.g., 10%); b) to stabilize an access network noise rise, e.g., when the INR metric overpass a related threshold IoT reference, e.g., exceeds the third predetermined threshold TH-3, see also blocks 230, 232 of Fig. 7.

In some examples, using the principle according to the disclosure enables to prioritize a stability of a network noise rise and to mitigate high intra-cell and/or inter-cell interference.

In some examples, using the principle according to the disclosure enables to use IoT noise ratio, e.g., IoT noise ratio learning, e.g., as output of an IRC receiver equalizer, e.g., for a radio cell as provided by the network device 20. In some examples, there is no need of any external inputs or additional information exchange, e.g., with neighboring network device (not shown) or cells.

In some examples, using the principle according to the disclosure can be considered as an IoT control mechanism, e.g., with providing an UL power control notification to the terminal device, e.g., user equipment, 20, e.g., to adapt its power emission, thus, e.g., reducing power device consumption and mitigating unwanted noise in the network.

In some examples, Fig. 2, the principle according to the disclosure may be applied in communication systems 1 using multiple-access technologies that may, e.g., include one or more different multiplexed resource variants, such as, e.g., Wideband Code Division Multiple Access (WCDMA), or time division multiple access (TDMA) systems, or frequency-division multiple access (FDMA) systems, or orthogonal frequency-division multiple access (OFDMA) systems, or single-carrier frequency-division multiple access (SC-FDMA) systems, or time division synchronous code division multiple access (TD-SCDMA) systems, or long term evolution (LTE). LTE/LTE-Advanced is a set of enhancements to the universal mobile telecommunications system (UMTS) mobile standard promulgated by the Third Generation Partnership Project (3GPP).

In some examples, e.g., for an OFDMA system, multiple access is achieved by assigning subsets of frequencies (sub-carriers) to individual users based on orthogonality properties of frequency-division multiplexing (OFDM) digital modulation scheme: it allows to discriminate each among all served users, to achieve the performance quality target and adequate acceptable user perception.

In some examples, an OFDMA system may provide high spectral efficiency within one cell, but may, e.g., be, for example highly, vulnerable to inter-cell interference. As well as WCDMA, also OFDMA may suffer from uplink interference, wherein WCDMA has some inherent Physical Layer mechanisms (e.g., macro diversity and spreading codes) to mitigate these effects.

In contrast, user data in OFDMA systems may be more localized in the time/frequency domain, as, e.g., compared to WCDMA: with the growth of data transfer, an interference reduction in a receiver, e.g., of a network device 10, may play an important role in a radio access network.

In some examples, an increased amount of UEs in near-far condition, the different types of base station receivers on different network layouts, the different layers in planned network, the overlapping cells coverage footprints represent main factors for noise rise inducing cell coverage shrinkage effect in loaded access network. In some examples, at least some of these aspects and their related disadvantages may be mitigated using the principle according to the embodiments.

**Claims**

1. An apparatus (100) for a network device (10), the apparatus (100) comprising at least one processor (102), and at least one memory (104) storing instructions (106) that, when executed by the at least one processor (102), cause the network device (10) to: determine (202) a first gain (G-1) associated with a received signal (sig-rx), wherein the first gain (G-1) characterizes a difference between a first signal to noise ratio (SNR-1) obtainable by processing the received signal (sig-rx) using a first technique (TECH-1) based on interference rejection combining and a second signal to noise ratio (SNR-2) obtainable by processing the received signal (sig-rx) using a second technique (TECH-2) different from the first technique (TECH-1), select (204), based on the first gain (G-1), a power control strategy (PCS) out of a plurality of power control strategies for a terminal device (20) associated with the received signal (sig-rx), at least temporarily apply (206) the selected power control strategy (PCS) for the terminal device (20).

2. The apparatus (100) according to claim 1, wherein the first technique (TECH-1) comprises using a minimum mean square error equalizer configured to perform interference rejection combining.

3. The apparatus (100) according to any of the preceding claims, wherein the second technique (TECH-2) comprises at least one of: a) determining a pre-equalized signal to noise ratio, or b) using a minimum mean square error equalizer configured to perform maximum ratio combining.

4. The apparatus (100) according to any of the preceding claims, wherein the instructions (106), when executed by the at least one processor (102), cause the network device (10) to: determine (210), whether the first gain (G-1) is greater than a first predetermined threshold (TH-1), and, if the first gain (G-1) is greater than the first predetermined threshold (TH-1), evaluate (212) the first signal to noise ratio (SNR-1).

5. The apparatus (100) according to any of the preceding claims, wherein the instructions (106), when executed by the at least one processor (102), cause the network device (10) to: determine (220), whether the first signal to noise ratio (SNR-1) is greater than a second predetermined threshold (TH-2), and, if the first signal to noise ratio (SNR-1) is greater than the second predetermined threshold (TH-2), exclude (222) to transmit a power up command to the terminal device (20).

6. The apparatus (100) according to claim 5, wherein the instructions (106), when executed by the at least one processor (102), cause the network device (10) to: if the first signal to noise ratio (SNR-1) does not exceed the second predetermined threshold (TH-2), evaluate (224) an interference to noise ratio (INR) associated with the received signal (sig-rx).

7. The apparatus (100) according to any of the preceding claims, wherein the instructions (106), when executed by the at least one processor (102), cause the network device (10) to: determine (230), whether a or the interference to noise ratio (INR) associated with the received signal (sig-rx) is greater than a third predetermined threshold (TH-3), and, if the interference to noise ratio (INR) is greater than the third predetermined threshold (TH-3), exclude (232) to transmit a power up command to the terminal device (20).

8. The apparatus (100) according to claim 7, wherein the instructions (106), when executed by the at least one processor (102), cause the network device (10) to: if the interference to noise ratio (INR) does not exceed the third predetermined threshold (TH-3), exclude (234) to transmit a power down command to the terminal device (20).

9. The apparatus (100) according to any of the preceding claims, wherein the instructions (106), when executed by the at least one processor (102), cause the network device (10) to: determine (240), whether the first gain (G-1) does not exceed a or the first predetermined threshold (TH-1), and, if the first gain (G-1) does not exceed the first predetermined threshold (TH-1), perform (242) power control of the terminal device (20) based on the second signal to noise ratio (SNR-2).

10. The apparatus (100) according to any of the preceding claims, wherein a first power control strategy (PCS-1) of the plurality of power control strategies comprises evaluating at least one of the following elements: a) the first signal to noise ratio (SNR-1), or b) a or the interference to noise ratio (INR) associated with the received signal (sig-rx).

11. The apparatus (100) according to any of the preceding claims, wherein a second power control strategy (PCS-2) of the plurality of power control strategies comprises evaluating the second signal to noise ratio (SNR-2).

12. The apparatus (100) according to any of the preceding claims, wherein at least temporarily applying (206) the power control strategy (PCS) for the terminal device (20) comprises at least one of: a) transmitting at least one command (PWR-CMD) associated with a transmit power to be used by the terminal device (20), or b) excluding to transmit, e.g., not transmitting, at least one command (PWR-CMD) associated with a transmit power to be used by the terminal device (20).

13. An apparatus (100') for a network device (10), the apparatus (100') comprising means (102') for: determining (202) a first gain (G-1) associated with a received signal (sig-rx), wherein the first gain (G-1) characterizes a difference between a first signal to noise ratio (SNR-1) obtainable by processing the received signal (sig-rx) using a first technique (TECH-1) based on interference rejection combining and a second signal to noise ratio (SNR-2) obtainable by processing the received signal (sig-rx) using a second technique (TECH-2) different from the first technique (TECH-1), selecting (204), based on the first gain (G-1), a power control strategy (PCS) out of a plurality of power control strategies for a terminal device (20) associated with the received signal (sig-rx), at least temporarily applying (206) the selected power control strategy (PCS) for the terminal device (20).

14. A method for a network device (10), the method comprising: determining (202) a first gain (G-1) associated with a received signal (sig-rx), wherein the first gain (G-1) characterizes a difference between a first signal to noise ratio (SNR-1) obtainable by processing the received signal (sig-rx) using a first technique (TECH-1) based on interference rejection combining and a second signal to noise ratio (SNR-2) obtainable by processing the received signal (sig-rx) using a second technique (TECH-2) different from the first technique (TECH-1), selecting (204), based on the first gain (G-1), a power control strategy (PCS) out of a plurality of power control strategies for a terminal device (20) associated with the received signal (sig-rx), at least temporarily applying (206) the selected power control strategy (PCS) for the terminal device (20).

15. The method according to claim 14, comprising:
determining (210), whether the first gain (G-1) is greater than a first predetermined threshold (TH-1), and, if the first gain (G-1) is greater than the first predetermined threshold (TH-1), evaluating (212) the first signal to noise ratio (SNR-1).

# Fig. 1A

# Fig. 1B

# Fig. 2

# Fig. 3

200 — RECEIVE SIGNAL FROM TERMINAL DEVICE

↓ sig-rx

202 — DETERMINE FIRST GAIN CHARACTERIZING DIFFERENCE BETWEEN FIRST SIGNAL TO NOISE RATIO OBTAINABLE BY PROCESSING RECEIVED SIGNAL USING FIRST TECHNIQUE BASED ON INTERFERENCE REJECTION COMBINING AND SECOND SIGNAL TO NOISE RATIO OBTAINABLE BY PROCESSING RECEIVED SIGNAL USING SECOND TECHNIQUE DIFFERENT FROM FIRST TECHNIQUE

↓ G-1

204 — SELECT, BASED ON FIRST GAIN, POWER CONTROL STRATEGY FOR TERMINAL DEVICE

↓ PCS

206 — AT LEAST TEMPORARILY APPLY SELECTED POWER CONTROL STRATEGY FOR TERMINAL DEVICE

↓ PCS

# Fig. 4

# Fig. 5

210 — DETERMINE, WHETHER FIRST GAIN IS GREATER THAN FIRST PREDETERMINED THRESHOLD

G-1 > TH-1 ?

212 — IF FIRST GAIN IS GREATER THAN FIRST PREDETERMINED THRESHOLD, EVALUATE FIRST SIGNAL TO NOISE RATIO

SNR-1

# Fig. 6

220 — DETERMINE, WHETHER FIRST SIGNAL TO NOISE RATIO IS GREATER THAN SECOND PREDETERMINED THRESHOLD

SNR-1 > TH-2?

222 — IF FIRST SIGNAL TO NOISE RATIO IS GREATER THAN SECOND PREDETERMINED THRESHOLD, EXCLUDE TO TRANSMIT POWER UP COMMAND TO TERMINAL DEVICE

224 — IF FIRST SIGNAL TO NOISE RATIO DOES NOT EXCEED SECOND PREDETERMINED THRESHOLD, EVALUATE INTERFERENCE TO NOISE RATIO ASSOCIATED WITH RECEIVED SIGNAL

INR

# Fig. 7

230 — DETERMINE, WHETHER INTERFERENCE TO NOISE RATIO ASSOCIATED WITH RECEIVED SIGNAL IS GREATER THAN THIRD PREDETERMINED THRESHOLD

INR > TH-3?

232 — IF INTERFERENCE TO NOISE RATIO ASSOCIATED WITH RECEIVED SIGNAL IS GREATER THAN THIRD PREDETERMINED THRESHOLD, EXCLUDE TO TRANSMIT POWER UP COMMAND TO TERMINAL DEVICE

234 — IF INTERFERENCE TO NOISE RATIO ASSOCIATED WITH RECEIVED SIGNAL DOES NOT EXCEED THIRD PREDETERMINED THRESHOLD, EXCLUDE TO TRANSMIT POWER DOWN COMMAND TO TERMINAL DEVICE

# Fig. 8

240 — DETERMINE, WHETHER FIRST GAIN DOES NOT EXCEED FIRST PREDETERMINED THRESHOLD

G-1 <= TH-1?

242 — IF FIRST GAIN DOES NOT EXCEED FIRST PREDETERMINED THRESHOLD, PERFORM POWER CONTROL OF TERMINAL DEVICE BASED ON SECOND SIGNAL TO NOISE RATIO

# Fig. 9

SM

PRG

INSTR

DCS

**Fig. 10**

## EUROPEAN SEARCH REPORT

**Application Number**

EP 25 15 8184

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/264692 A1 (LIU JINHUA [CN] ET AL) 17 September 2015 (2015-09-17) * paragraph [0026] - paragraph [0032] * * paragraph [0038] - paragraph [0040] * ----- | 1-15 | INV. H04W52/24 |
| A | HASAN WAEL BOUKLEY ET AL: "Spatial Uplink Power Control for Massive MIMO", 2017 IEEE 85TH VEHICULAR TECHNOLOGY CONFERENCE (VTC SPRING), IEEE, 4 June 2017 (2017-06-04), pages 1-6, XP033254649, DOI: 10.1109/VTCSPRING.2017.8108658 [retrieved on 2017-11-14] * Sections I and II * ----- | 1-15 | |
| A | US 2018/249449 A1 (HWANG JINYUP [KR] ET AL) 30 August 2018 (2018-08-30) * paragraph [0118] - paragraph [0137] * ----- | 1-15 | |

**TECHNICAL FIELDS SEARCHED (IPC)**

H04W
H04L

The present search report has been drawn up for all claims

| Place of search | Date of completion of the search | Examiner |
|---|---|---|
| The Hague | 25 June 2025 | López Márquez, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 25 15 8184

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | Publication date | Patent family member(s) | | Publication date |
|---|---|---|---|---|
| US 2015264692 A1 | 17-09-2015 | CN | 104871604 A | 26-08-2015 |
| | | EP | 2910067 A1 | 26-08-2015 |
| | | US | 2015264692 A1 | 17-09-2015 |
| | | WO | 2014059659 A1 | 24-04-2014 |
| US 2018249449 A1 | 30-08-2018 | US | 2018249449 A1 | 30-08-2018 |
| | | WO | 2017061754 A1 | 13-04-2017 |

EPO FORM P0459

For more details about this annex : see Official Journal of the European Patent Office, No. 12/82